# EUROPEAN PATENT APPLICATION

(11) **EP 0 561 508 A1**
(43) Date of publication of application: **22.09.1993**
(21) Application number: 93301282.5
(22) Date of filing: 22.02.1993
(51) Int. Cl.: C05F 11/02, C09K 7/02

(54) **Liquid ammoniation of ground leonardite ore for dust suppression**

(30) Priority: 18.03.1992 US 853531
(71) Applicant: AMERICAN COLLOID COMPANY, Arlington Heights, Illinois 60004 (US)
(72) Inventor: Keen, David, Stuart, Florida 34996 (US)
(74) Representative: McCall, John Douglas

(57) **Abstract**

A method of manufacturing relatively dust-free, water-soluble ammonium humate particles for agricultural, plant growth and drilling fluid viscosity lowering uses and to a method of improving the yield of agricultural and horticultural crops by ammoniating a ground leonardite ore. Ground and at least partially dried leonardite ore is contacted, during or after grinding, with an aqueous solution of ammonia to substantially suppress dust formation resulting from the grinding operation and to render the leonardite ore particles substantially more absorbent to aqueous nutrients and more easily dispersed into soil for agricultural purposes. The ammoniated leonardite ore particles also are more useful for lowering the viscosity of drilling muds and other known uses for leonardite ore. In one embodiment, fertilizers, e.g., N-P-K additives, can be blended with the ammoniated leonardite ore to further improve the nutrient-supplying capacity of the ground and ammonia-treated leonardite ore. The treatment of ground leonardite ore with ammonia to essentially eliminate dust is particularly advantageous when the ground leonardite ore is mixed with fertilizers, such as N-P-K (nitrogen, phosphorous and potassium fertilizer blends).

## Description

The present invention is directed to a method of manufacturing essentially dust-free modified leonardite ore particles by contacting ground leonardite ore particles with aqueous ammonia, thereby reacting at least a portion of the humic acid contained in the surface of the ground leonardite ore with ammonia to form hygroscopic ammonium humate on at least the surface of the ground leonardite ore particles. The essentially dust-free leonardite ore particles are particularly useful as a fertilizer, as a viscosity lowering additive for well drilling muds and in every other known use for leonardite ore. The dust-free modified leonardite ore particles can be combined with other nutrients, such as N-P-K nutrients, for increased fertilizer value.

Soil humus, consisting of organic residues from the decomposition of plant matter, is known as an important soil constituent for enhancing the growth of plants. The formation of soil humus depends upon an adequate supply of raw organic residues and upon suitable conditions for their decomposition. Should either condition be lacking, the eventual decrease in soil humus content leads to reduced soil fertility. In these cases, the addition of organic matter is necessary to increase the fertility of the soil.

Humic acid, defined as the portion of soil humus that is soluble in alkaline solution, but insoluble in acid solution, is a form of organic matter that often is added to the soil to increase fertility. Humic acid is found in rotting vegetable matter and can be detected in the black slime of an ordinary compost pit in a home garden. It also is found in the brown organic matter of a variety of soils, as well as in peats, manure, lignite, leonardite ore and brown coals. Humic acid does not have a single unique structure, but is a mixture of intermediate chemical products resulting from the decomposition and conversion of lignin and other plant materials to hard coal. Humic acid apparently is formed by the bacterial and chemical degradation of plant tissue, but in soils it also may be formed by certain secondary processes such as polymerization of polyphenols leached by rain from surface leaf litter, and condensation of phenols, quinones, and proteins that are provided by the action of soil micro-organisms and small animals on soil carbohydrates. As a result, humic acid is best characterized in terms of its origin and soil environment, rather than in rigid terms of chemical composition or chemical properties.

Humic acid has been used either as a soil amendment or as a fertilizer component to increase the fertility of soils. For instance, in U.S. Patent Nos. 3,111,404; 3,264,084; 3,544,295 and 3,377,152, Karcher discloses a complex and expensive method of producing a dry ammonium humate fertilizer by treating a humic acid-bearing ore, such as leonardite ore, first with phosphoric acid, then with ammonia, in order to extract the humic acid content. Burdick, in U.S. Patent No. 2,992,093, teaches a similar extraction process yielding dry humates useful as soil conditioners and fertilizers. Particulate ammonium humate fertilizers are disclosed by Cooley in U.S. Patent No. 3,418,100.

Another method of extracting humic acid from a humic acid-bearing ore is disclosed in U.S. Patent No. 3,770,411 to Chambers, whereby a liquid humate product is obtained by reaction with ammonia, then with phosphoric acid and, if desired, micronutrient elements.

The methods and compositions disclosed in the prior art are generally difficult and/or impractical to use and prepare. The disclosed methods are complex and involve large and expensive machinery for extraction of humic acids. The prior art methods for producing granular humates further suffer in that a substantial amount of the micro-nutrient elements essential to plant growth are extracted and removed during processing of the humic acid-bearing ore to a granular humic acid product. Methods of producing granular humates are also expensive, time-consuming, and require extra machinery to dry the humic acid product before packaging and use.

Frequently, the extracted humic acid is precipitated with ammonia or an ammonium salt to form colloidal ammonium humates, sometimes also including ammonium fulvates. Leonardite ore is a coal-like substance similar in structure and composition to lignite. It has been considered to be a precursor to lignite. It is believed to be present in existing deposits as a derivative, by oxidation, from lignite. The process of natural oxidation is due to exposure to atmospheric oxygen and ground water. Oxidation occurs primarily at the exposed faces and at shallow depths in ore overlying or graded into harder and more compact lignite beds.

Leonardite ore has been found to be a source of base material for a soil nutrient including humic and fulvic acids. The significant elemental difference between leonardite ore and lignite is its oxygen content. Leonardite ore has an oxygen content on the order of 28 to 29 percent. Lignite has a much lower oxygen content of 19 to 20 percent. The higher oxygen content of leonardite ore is due to the larger number of carboxylic acid groups. Thus, leonardite ore is far more water soluble than lignite. Spectral studies have indicated that leonardite ore is comprised of a high proportion of mixed salts of humic and fulvic acids.

Such acids in the form of ammonium humates or ammonium fulvates are soluble and are of characteristics such as to be highly nutritive to plants. They thus may form fertilizers of outstanding quality.

Previous attempts to utilize the humic acid content of leonardite ore have concentrated mainly on a process to extract the humic acid content of leonardite ore. Usually the leonardite ore was made colloidal by ammoniation in water solution, however, with aging, the ammonia evaporated and the humic acid content again became insoluble. Additionally, the processing of the leonardite ore involved numerous steps, including separation of any insoluble material by a filtration process requiring the addition of large amounts of water, i.e., establishment of a slurry, thus necessitating the subsequent removal of relatively large volumes of water.

Leonardite ore in its natural state is composed predominantly of insoluble calcium, iron and aluminum humates. The calcium content of leonardite ore is high, and accordingly, treatment with materials that remove the calcium and form inorganic, insoluble calcium salts increases the water solubility of the humate.

The North Dakota leonardite ore preferably used in the method of the present invention is defined by the U.S. Bureau of Mines as "essentially salts of humic acids". The humic acid derived from this North Dakota leonardite ore differs from the theoretical formula of humic acid because part of the humic acid structure has been oxidized, leaving sites for cation absorption by the resultant negative charge.

Chemical studies of the composition of leonardite ore have revealed that it is mainly composed of the mixed salts of acid radicals found in soil humus, a product of the decay of organic matter that contains both humic and non-humic material.. Such acid radicals are collectively termed "humic acids," having individual fractions named humin, humic acid, ulmic acid and fulvic acid. The exact structure of the humic acids are unknown. However, humic acids appear to be associations of molecules forming aggregates of elongated bundles of fibers at low pH, and open flexible structures perforated by voids at high pH. These voids, of varying dimensions, trap organic or inorganic particles of appropriate electronic charge.

The humic acids have a large cation exchange capacity and hold multivalent elements, such as micronutrient elements, very strongly. The molecular weight of the humic acids range from about 800 to about 500,000, with the weight average molecular weight ranging from about 5,000 to about 50,000. The cation exchange capacity of the humic acids varies from about 200 to about 600 meq CaCO₂ per 100 grams at pH 7, depending upon the origin of the extracted acids. Humic acids are polyelectrolytes and are believed to form complexes with clay particles thus enabling humic acids to bind multivalent elements with great tenacity. When the cation exchange sites on the humic acid molecule are filled predominantly with hydrogen ions, the material, considered to be an acid, is insoluble in water. However, when the predominant cations at the exchange sites are other than hydrogen, the material is called a "humate". Humates of the monovalent alkali metals or ammonia are soluble in water, but the humates of most multivalent metals are insoluble.

Humic acids in the form of their ammonium salts are soluble in water and when mixed with soil, have been found to promote plant growth. Specifically, the ammonium humates increase root growth and root formation, deepen the color of leaves, flowers and fruit, increase branching at high application rates, and increase the volume of fruit obtained.

Such beneficial effects on plant growth make ammonium humates highly desirable. However, the ammonium salts of humic acid tend to lose ammonia via evaporation, leaving the insoluble humic acid behind. As a result, ammonium humate solutions do not possess the stability to make them viable as concentrated liquid growth-stimulating products.

In accordance with the method of the present invention, however, it has been found that ammoniation of ground leonardite ore, in the raw ore state (without first extracting the humic acid content) not only solves the dust problems associated with grinding raw leonardite ore, but also provides a more water-soluble ammonium humate having increased capacity to absorb and release added soil nutrients for agricultural uses. Surprisingly, the contact of leonardite ore particles with ammonia, in accordance with the present invention, swells the particles and eliminates dust and the swelling and dust elimination remain even after substantial periods of time.

In brief, the present invention is directed to a method of manufacturing relatively dust-free, water-soluble ammonium humate particles for agricultural, plant growth and drilling fluid viscosity lowering uses and to a method of improving the yield of agricultural and horticultural crops by ammoniating a ground leonardite ore.

In accordance with the present invention, ground and at least partially dried leonardite ore is contacted, during or after grinding, with an aqueous solution of ammonia to substantially suppress dust formation resulting from the grinding operation and to render the leonardite ore particles substantially more absorbent to aqueous nutrients and more easily dispersed into soil for agricultural purposes. The ammoniated leonardite ore particles also are more useful for lowering the viscosity of drilling muds and other known uses for leonardite ore.

In one embodiment, fertilizers, e.g., N-P-K additives, can be blended with the ammoniated leonardite ore to further improve the nutrient-supplying capacity of the ground and ammonia-treated leonardite ore. The treatment of ground leonardite ore with ammonia to essentially eliminate dust is particularly advantageous when the ground leonardite ore is mixed with fertilizers, such as N-P-K (nitrogen, phosphorous and potassium fertilizer blends), since prior art dust and air pollution problems associated with ground leonardite ore have substantially prevented the art from blending ground leonardite ore with substantial quantities, e.g., 50-150 pounds per ton, of fertilizers.

Accordingly, one aspect of the present invention is to provide a method of ammoniating humic acids in a mined, dried and ground leonardite ore, without first extracting the humic acids from the ore, to substantially eliminate dust in the ground leonardite ore and to substantially enhance the capability of blending the ground leonardite ore with other nutrients, e.g., fertilizers, without air pollution.

Another aspect of the present invention is to provide a method of suppressing dust during or after a leonardite ore grinding operation by contacting the leonardite ore, during or after grinding, with liquid ammonia, without first extracting the humic acid content from the leonardite ore, to agglomerate the fine leonardite ore particles and suppress dust formation.

Still another aspect of the present invention is to provide a method of combining nutrients with ground leonardite ore, substantially without dust formation, by contacting the ground leonardite ore, prior to adding the nutrients, with aqueous ammonia to form ammonium humates on at least the surface of the ground leonardite ore particles, thereby rendering the leonardite ore particles more absorbent to soil nutrients, particularly aqueous solutions of soil nutrients.

The above and other aspects and advantages of the present invention will become apparent from the following detailed description of the preferred embodiments of the present invention, and from the drawings, in which:-
Figure 1 is a general, schematic flow diagram showing the method of ammoniating humic acid contained in ground and dried leonardite ore; and
Figure 2 is a general, schematic flow diagram showing another embodiment for ammoniation of ground, dried leonardite ore, showing a cone mixer for contact leonardite ore with ammonia.

In accordance with the method of the present invention, leonardite ore is mined, dried to a moisture content of less than about 30% by weight, and then ground to any suitable particle size distribution, e.g., from about 4 mesh to about 400 mesh, preferably about 20 mesh to about 200 mesh, (U.S. Sieve Series) and thereafter contacted with aqueous ammonia having a concentration in the range of about 28 to about 45% by weight, preferably about 20% to about 45% by weight ammonia to substantially eliminate any dust or extremely fine leonardite ore particles resulting from grinding. In accordance with an important feature of the present invention, the aqueous ammonia contacts humic acid contained in at least the surface of the ground leonardite ore particles to form ammonium humates causing the leonardite ore particles to become hygroscopic and causing the ground leonardite ore particles to swell somewhat due to the ammoniation of the humic acids in at least the surface of the particles. The surface ammoniation and swelling of the particles prevents the particles from being entrained in air, even after partial evaporation of the ammonia solution. Blending and other handling of the ammoniated, ground leonardite ore particles can be carried out without air pollution of fine leonardite ore particles formed during the grinding operation.

In accordance with one extremely advantageous aspect of the present invention, treatment of the ground leonardite ore with aqueous ammonia to render the ore hygroscopic and to swell the particles for elimination of many of the very fine particles, e.g., having a particle size small enough to pass 100 mesh, U.S. Sieve Series, and particularly for elimination of most of the particles that pass a 200 mesh screen, provides a leonardite ore that is extremely receptive to absorption of aqueous nutrients, e.g., fertilizers such as nitrogen, potassium and/or phosphorous-containing water-soluble salts (e.g., N-P-K) and also prevents air pollution due to the elimination of most of the extremely fine or dusty leonardite ore particles (particles less than about 150 microns). The elimination of dust greatly simplifies mixing ground leonardite ore with aqueous solutions of and/or solid, nutrients for absorption of the nutrients into the ammoniated leonardite ore. As well known in the art, mined, dried and ground leonardite ore is not very absorbent to aqueous fertilizer components and is extremely dusty, thereby limiting the amount of mixing of ground leonardite ore with aqueous fertilizer components in an attempt to control dust and air pollution problems.

In accordance with the present invention, leonardite ore, after partial drying to a moisture content of about 30% by weight or less, dry basis, and generally to a water content of about 10% to about 30% by weight, preferably about 15% to about 20% by weight, is contacted with an aqueous ammonia solution, during or after grinding, rendering the leonardite ore hygroscopic, to swell the leonardite ore particles, and to substantially eliminate dust that would otherwise be a problem with the remaining fine leonardite ore particles. The resulting ammoniated leonardite ore contains ammonium humate, on at least the surface of the ground particles, that is more water-soluble than humic acid so that the ammonium humates can be more readily dissolved into the soil to provide agricultural nutrients upon contact with water, e.g., rainwater. Aqueous ammonia is added to the ground leonardite ore particles in an amount of about 5% to about 50% by weight, preferably about 10% to about 40% by weight, based on the dry weight of the leonardite ore particles contacted with aqueous ammonia. To achieve the full advantage of the present invention, the aqueous ammonia is added to the leonardite ore, having a moisture content of about 10% to about 20%, in an amount sufficient to increase the moisture content of the ore particles, dry ore basis, up to about 30% to about 40% by weight, preferably about 35% to about 40% by weight, using aqueous ammonia having a concentration of about 20% to about 30% by weight ammonia.

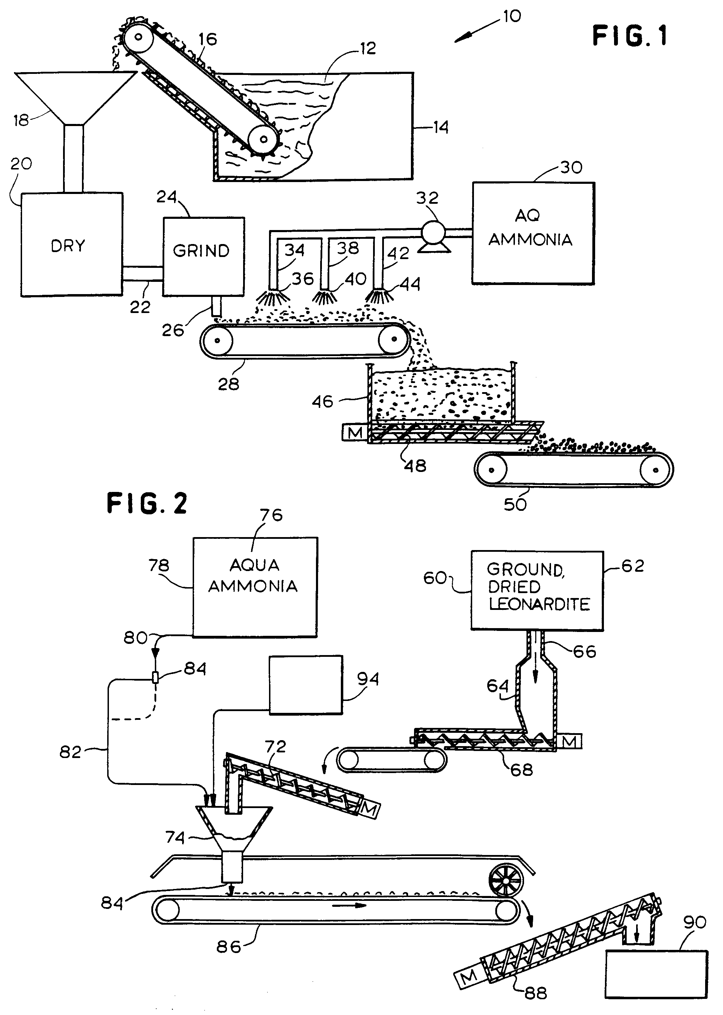

Turning now to the drawings, and initially to Figure 1, there is illustrated a schematic flow diagram for practicing the method of the present invention, generally designated by reference numeral 10. As shown in Figure 1, mined leonardite ore 12 is deposited into an ore holding vessel 14 and is conveyed by conveyor belt 16 to a dryer feed hopper 18 at a controlled rate. From dryer feed hopper 18, the ore is conveyed to a dryer 20 operated at a temperature in the range of about 1,000°F to about 2,500°F to dry the raw leonardite ore to a moisture content of about 30% by weight or less, and generally in the range of about 10% to about 20% by weight water, dry leonardite ore basis. The partially dried leonardite ore proceeds through conduit 22 to a grinder 24 where the partially dried ore is ground to a particle size distribution in the range of about 4 mesh to about 400 mesh, U.S. Sieve Series, or about 30 to about 4,760 microns.

To achieve the full advantage of the present invention, the leonardite ore is ground to a powder, prior to ammonia contact, to a particle size distribution such that 0% of the particles are retained on a 10 mesh screen, U.S. Sieve Series, (the preferred particles are all less than 2,000 microns in size prior to ammonia contact) and contains at least about 10% by weight, and preferably about 20% to about 35% of fine particles having a particle size such that the particles pass through a 100 mesh screen, U.S. Sieve Series, (less than about 149 microns in size). Generally, after grinding, and before ammonia contact, about 20% to about 30% by weight, dry basis, of the particles have a size less than about 149 microns (pass a 100 mesh screen). The ground leonardite ore passes from the grinder 24 through conduit 26 onto conveyor belt 28 where the ground ore is contacted with aqueous ammonia, preferably sprayed onto the ground ore particles from aqueous ammonia holding vessel 30, pump 32 and/or conduits 34 and nozzle 36; conduit 38 and nozzle 40; and/or conduit 42 and nozzle 44. To achieve the full advantage of the present invention, the ammonia addition to the ground leonardite ore particles should be in the range of about 10% to about 30% based on the dry weight of leonardite ore particles contacted with ammonia. Too little ammonia absorption and/or adsorption into and onto the leonardite ore particles has negligible dust suppression, and too much ammonia addition could remove humic acids from the leonardite ore by solubilizing the humic acids in aqueous solution and the solubilized humic acids could be drained away from the solid ore remaining, by gravity, together with excess water if the ore were saturated sufficiently to allow water and humic acid to drip off of the ore. After aqueous ammonia contact, the leonardite ore particles swell.

The final form of the leonardite ore particles can be either a powder or a granular form. The granular form of the product has a preferred particle size distribution, before ammoniation, such that 100% of the particles pass through a 4 mesh screen; about 1% to about 10% by weight of the particles are retained on a 10 mesh screen; about 20% to about 40%, preferably about 25% to about 35% of the particles are retained on a 20 mesh screen; about 30% to about 75% by weight, preferably about 40% to about 60% by weight, of the particles are retained on a 100 mesh screen; about 5% to about 15% of the particles are retained on a 200 mesh screen; and about 3% by weight or less of the particles pass through a 200 mesh screen (about 3% or less by weight of the particles are smaller than about 74 microns), U.S. Sieve Series.

The powder form of the leonardite ore, before ammoniation, has a preferred particle size distribution such that 100% of the particles pass through a 10 mesh screen; less than about 5% by weight, preferably less than about 2% by weight of the ore particles are retained on a 20 mesh screen; about 15% by weight to about 50% by weight, preferably about 20% to about 35% of the ore particles are retained on a 100 mesh screen; about 15% by weight to about 50% by weight, preferably about 20% to about 35% by weight, of the ore particles are retained on a 200 mesh screen; and about 25% to about 60% by weight, preferably at least about 40% by weight of the ore particles pass through a 200 mesh screen, U.S. Sieve Series.

The aqueous ammonia contacting the ground leonardite ore particles reacts with the humic acid at least on the surfaces of the leonardite ore particles, thereby forming ammonium humates and rendering the leonardite ore particles hygroscopic and substantially dust free. The ammoniated (at least surface ammoniated) leonardite ore particles fall from conveyor belt 28 into a treated leonardite ore holding and mixing vessel 46 where the treated leonardite ore particles are mixed via auger 48 and conveyed through auger 48 onto a suitable conveyor belt 50. From conveyor belt 50, the treated leonardite ore particles are conveyed into bags or otherwise suitably packaged for sale.

The contact of ground leonardite ore with aqueous ammonia increases the humic acid solubility and usefulness of the ground leonardite ore regardless of the particle size distribution that results from the leonardite ore grinding step. Thus, a granular product, initially having a preferred particle size distribution, as shown in Table I, will swell to a particle size distribution, after ammoniation, as shown in Table I.

**TABLE I**

| GRANULAR | | | |
|---|---|---|---|
| GRANULAR | | GRANULAR AFTER AMMONIATION | |
| MESH SIZE U.S. SIEVE SERIES | WT.% PARTICLES HELD ON SCREEN | MESH SIZE U.S. SIEVE SERIES | WT.% PARTICLES HELD ON SCREEN |
| 4 | 0 | 4 | 0 |
| 10 | 5.7 | 10 | 21.8 |
| 20 | 31.8 | 20 | 57.2 |
| 100 | 53.3 | 100 | 19.8 |
| 200 | 7.9 | 200 | 0.1 |
| PAN | | PAN | |
| (passes 200) | 1.3 | (passes 200) | 1.1 |

Thus, the ammoniated ground leonardite ore in granular form has substantially less particles having a size less than about 149 microns (that pass a 100 mesh screen), substantially more particles above 2,000 microns in size; and substantially more particles between 1,000 microns and 2,000 microns in size. The ground particles having a size less than about 149 microns (100 mesh) were reduced from 9.2% to 1.2% by contact with ammonia which is more surprising, especially after partial drying of the added ammonia.

The ammonia contact of ground leonardite ore particles in accordance with the present invention, is most advantageous for dust suppression when the leonardite ore is ground to a powder form. A suitable, preferred particle size distribution for a powder product is shown in Table II, both before and after ammonia contact.

**TABLE II**

| POWDER | | | |
|---|---|---|---|
| POWDER | | POWDER AFTER AMMONIATION | |
| MESH SIZE U.S. SIEVE SERIES | WT.% PARTICLES HELD ON SCREEN | MESH SIZE U.S. SIEVE SERIES | WT.% PARTICLES HELD ON SCREEN |
| 4 | 0 | 4 | 0 |
| 10 | 0 | 10 | 0 |
| 20 | 0.4 | 20 | 1.7 |
| 100 | 26.9 | 100 | 67.9 |
| 200 | 26.1 | 200 | 22.5 |
| PAN | | PAN | |
| (passes 200) | 46.6 | (passes 200) | 7.9 |

As shown in Table II, ammoniation decreases the amount of fine powdered leonardite ore particles having a particle size less than 74 microns (pass a 200 mesh screen) from 46.6% by weight to 7.9% by weight and increases the amount of leonardite ore particles having a particle size in the range of about 74 microns to less than about 840 microns from about 53% by weight to about 90.4% by weight.

In accordance with another important embodiment of the present invention, as shown in Figure 2, ground, dried leonardite ore 60 (ground and dried to the same extent as set forth with respect to the method described with reference to Figure 1) contained in holding vessel 62 is conveyed into a ground leonardite ore hopper 64 through ground conduit 66 and proceeds through auger 68 to conveyor belt 70. Conveyor belt 70 can be electronically controlled to feed a desired feed rate of dried leonardite ore into feed auger 72 in response to an automatic weighing of ground leonardite ore on conveyor belt 70, as well known in the art. A predetermined feed rate of dried, ground leonardite ore is fed through feed auger 72 into a cone mixer 74 where the dried and ground leonardite ore is contacted with aqueous ammonia 76.

The aqueous ammonia 76 is contained in aqueous ammonia storage hopper 78 and fed to the cone mixer 74 through conduits 80 and 82 and through a magnetic meter 84, capable of metering a desired flow rate of aqueous ammonia into cone mixer 74 responsive to, or set in accordance with, the feed rate of ground and dried leonardite ore fed from conveyor belt 70. A desired ratio of ground and dried leonardite ore and aqueous ammonia are contacted and mixed within the cone mixer 74 to react aqueous ammonia 76 with at least the surface molecules of humic acid in the ground leonardite ore to form ammonium humates. The ammoniated leonardite ore is fed from cone mixer outlet 84 onto an upper surface of conveyor belt 86 and then into auger mixer 88, for further mixing and then to typical bagging apparatus 90. The cone mixer 74 achieves homogeneous mixing of the aqueous ammonia with the ground and dried leonardite ore to provide a hygroscopic surface to the leonardite ore particles and to provide the capability of ready absorption of liquid nutrients fed from optional aqueous or solid nutrient holding vessel 94, and to substantially prevent dust formation during the mixing process.

Examples of suitable water-soluble nutrients capable of being added to the ammoniated ground leonardite ore particles of the present invention, in any concentration, e.g., 0.5% to about 50% by weight, limited only by water-solubility, including the following: Ammoniated superphosphate; ammonium nitrate-limestone combinations; ammonium phosphate (11-48% by weight); ammonium phosphate-sulfate (16-20% by weight); ammonium chloride, NH₄Cl; ammonium metaphosphate, NH₄PO₃; ammonium molybdate; ammonium nitrate, NH₄NO₃ and (NH₄)₂ NO₄; ammonium phosphates, both monoammonium phosphate (MAP) and diammonium phosphate (DAP); calcium nitrate, Ca(NO₃)₂·4H₂O; sodium nitrate, NaNO₃; urea, CO (NH₂)₂; sodium chloride, NaCl; ammonium chloride, NH₄Cl; ammonium sulfate, (NH₄)₂SO₄; potassium chloride, KCl; potassium nitrate, KNO₃; ammonium phosphate, NH₄H₂PO₄; potassium phosphate, KH₂PO₄; potassium sulfate, K₂SO₄; ammonia, NH₃; ammonium sulfate, (NH₄)₂SO₄; borax, Na₂B₄O₇·10H₂O; calcium nitrate, Ca(NO₃)₂·4H₂O; copper sulfate, CuSO₄·5H₂O; diammonium phosphate, (NH₄)₂HPO₄; magnesium sulfate, MgSO₄·7H₂O; magnesium sulfate, MnSO₄·4H₂O; and z inc sulfate, ZnSO₄·6H₂O.

Also, useful are solutions of any of a series of phosphoric acids whose molecular structure contains more than one atom of phosphorus, such as pyrophosphoric acid (H₄P₂O₇), tripolyphosphoric acid (H₅P₃O₁₀), tetrapolyphosphoric acid (H₆P₄O₁₃), and the like.

Water solutions of the primary nutrients, nitrogen, phosphorus, and potassium, are preferred and aqueous solutions of the secondary nutrients, calcium, magnesium, and sulfur, are desirable macronutrients -macro-, meaning "large" -- because they are required by growing plants in relatively large amounts. The micronutrients, boron, chlorine, cobalt, copper, iron, manganese, molybdenum, and zinc, also are desirable since they are required by the growing plant in relatively small amounts.

It should be understood that the present disclosure has been made only by way of preferred embodiments and that numerous changes in details or construction, combination and arrangement of parts can be resorted to without departing from the spirit and scope of the invention as hereunder claimed:

## Claims

1. A method of suppressing dust resulting from grinding a leonardite ore comprising grinding leonardite ore into particles and, during or after grinding, contacting said ground leonardite ore particles with an aqueous ammonia solution to form ammonium humate in at least a surface of said ground leonardite ore particles.

2. A method as claimed in claim 1, wherein the leonardite ore is ground to a particle size distribution in the range of about 4 mesh to about 400 mesh, U.S.Sieve Series.

3. A method as claimed in claim 1 or 2, wherein the aqueous ammonia solution has an ammonia concentration of about 2% to about 45% ammonia by weight of the aqueous solution.

4. A method as claimed in claim 3, wherein the ammonia concentration is in the range of about 10% to about 30% ammonia by weight of the aqueous solution.

5. A method as claimed in any one of the preceding claims, wherein the particles prior to ammonia contact include about 5% to about 20% by weight of particles having a particle size less than about 150 microns.

6. A method as claimed in any one of the preceding claims, wherein the ground leonardite ore, prior to contact with ammonia, has a particle size distribution such that essentially all particles are less than about 2,000 microns in size and about 5% to about 15% by weight of the particles, dry basis, are less than about 150 microns in size.

7. A method as claimed in any one of the preceding claims, further including the step of contacting and mixing the ammonia-contacted leonardite ore with an aqueous solution of a nitrogen, phorous or potassium-containing plant nutrient to absorb the plant nutrient into the leonardite ore particles.

8. A method as claimed in claim 6, wherein the plant nutrient has a concentration of about 0.5% to about 50% by weight and is selected from the group consisting of ammoniated superphosphate; ammonium nitrate-limestone combinations; ammonium phosphate (11-48% by weight); ammonium phosphate-sulfate (16-20% by weight); ammonium chloride, NH₄Cl; ammonium metaphosphate, NH₄PO₃; ammonium molybdate; ammonium nitrate, NH₄NO₃ and (NH₄)₂NO₄; ammonium phosphates, both monoammonium phosphate (MAP) and diammonium phosphate (DAP); calcium nitrate, Ca(NO₃)₂.4H₂O; sodium nitrate, NaNO₃; urea, CO(NH₂)₂; sodium chloride, NaCl; ammonium chloride, NH₄Cl; ammonium sulfate, (NH₄)₂SO₄; potassium chloride, KCl; potassium nitrate, KNO₃; ammonium phosphate, NH₄H₂PO₄; potassium phosphate, KH₂PO₄; potassium sulfate, K₂SO₄; ammonia; NH₃; ammonium sulfate, (NH₄)₂SO₄; borax, Na₂B₄O₇.1OH₂O; calcium nitrate; Ca(NO₃)₂.4H₂O; copper sulfate, CuSO₄.5H₂O; diammonium phosphate, (NH₄)₂HPO₄; magnesium sulfate, NgSO₄.7H₂O; magnesium sulfate, MnSO₄.4H₂O; and zinc sulfate, ZnSO₄.6H₂O.

9. A method as claimed in claim 7, wherein the plant nutrient has a concentration of about 0.5% to about 50% by weight and is selected from the group consisting of pyrophosphoric acid (H₄P₂O₇), tripolyphosphoric acid (H₅P₃O₁₀), tetrapolyphosphoric acid (H₆P₄O₁₃), and mixtures thereof.

10. A method as claimed in any one of the preceding claims, wherein after ammonia contact, the leonardite ore particles include about 3% or less particles having a size less than about 150 microns.

11. A method as claimed in any one of the preceding claims, wherein after ammonia contact, at least 95% of the particles are larger than 590 microns up to about 4,760 microns and about 10% to about 20% of the particles are smaller than about 210 microns, with essentially no particles less than 74 microns in size.

12. A method as claimed in any one of the preceding claims, wherein the leonardite ore is ground to have a particle size, prior to ammoniation, such that 100% of the particles have a size less than 4,760 microns; about 1% to about 10% by weight of the particles have a particle size in the range of about 2,000 microns to less than about 4,760 microns; about 20% to about 40% by weight of the particles have a particle size in the range of about 840 microns to less than about 2,000 microns; about 30% to about 75% of the particles have a particle size in the range of about 149 microns to less than about 840 microns; about 5% to about 15% of the particles have a particle size in the range of about 74 microns to less than about 149 microns; and less than about 3% by weight of the particles have a particle size less than about 74 microns.

13. A method as claimed in claim 12, wherein, prior to ammonia contact, about 25% to about 35% by weight of the particles have a particle size in the range of about 840 microns to less than about 2,000 microns; and wherein about 40% to about 60% by weight of the particles have a particle size in the range of about 149 microns to less than about 840 microns.

14. A method as claimed in any one of claims 1 to 11, wherein the leonardite ore is ground to have a particle size, prior to ammoniation, such that 100% of the particles are smaller than about 2,000 microns; less than about 5% by weight of the particles have a particle size in the range of about 840 microns to less than about 2,000 microns; about 15% to about 50% by weight of the particles have a particle size in the range of about 149 microns to less than about 840 microns; about 15% to about 50% by weight of the particles have a particle size in the range of about 74 microns to less than about 149 microns; and about 25% to about 50% by weight of the particles have a particle size less than about 74 microns.

15. The product of the process defined in any one of the preceding claims.
